Europäisches Patentamt

European Patent Office

Office européen des brevets

(19)

(11) Numéro de publication : **0 445 003 A1**

# (12) DEMANDE DE BREVET EUROPEEN

(21) Numéro de dépôt : **91400468.4**

(22) Date de dépôt : **21.02.91**

(51) Int. Cl.⁵ : **B60C 23/04, B60C 23/20**

(30) Priorité : **28.02.90 FR 9002503**

(43) Date de publication de la demande :
**04.09.91 Bulletin 91/36**

(84) Etats contractants désignés :
**DE ES FR GB IT**

(71) Demandeur : **LABINAL**
**5 avenue Newton**
**Montigny-le-Bretonneux (Yvelines) (FR)**

(72) Inventeur : **Bugnot, Denis**
**48 Rue Félix Faure**
**F-95880 Enghien (FR)**

(74) Mandataire : **Bernasconi, Jean et al**
**CABINET LEMOINE ET BERNASCONI 13,**
**Boulevard des Batignolles**
**F-75008 Paris (FR)**

(54) **Dispositif de surveillance de pneumatiques de roues de véhicules autmobiles.**

(57)    Le dispositif présente des modules de roue (1-5) avec un capteur de température, un capteur de pression et un circuit électronique associé et comprenant une mémoire non volatile par laquelle est écrite l'information relative aux caractéristiques de dérive du capteur, ledit module étant respective-ment relié, par des moyens de couplage capacitif (11, 12, 13, 14) en mode de transmission différentiel, à un module associé (6-10) fixé sur la structure fixe et comprenant des moyens électroniques pour la compensation de dérive des capteurs, un câblage ordinaire (15-19) s'étendant depuis ledit module vers l'unité centrale d'exploitation (21).

EP 0 445 003 A1

Jouve, 18, rue Saint-Denis, 75001 PARIS

# FIG.1

# DISPOSITIF DE SURVEILLANCE DE PNEUMATIQUES DE ROUES DE VEHICULES AUTOMOBILES

La présente invention a trait à un dispositif de surveillance de pneumatiques de roue de véhicules automobiles, ainsi qu'aux nouveaux éléments constitutifs de ce dispositif.

La déposante a déjà décrit, dans le brevet FR-A-82 11 740, un dispositif de surveillance de pneumatiques de roue des véhicules automobiles comprenant, sur la roue, un dispositif de mesure d'un paramètre tel que par exemple une pression et/ou une température à l'intérieur d'un pneumatique porté par la roue, et des moyens d'exploitation portés par le châssis, tels qu'une unité centrale d'exploitation, reliés aux dispositifs de mesure sur les roues, par des liaisons affectées aux différentes roues. Ce dispositif est remarquable en ce que la liaison entre le ou les capteurs portés par la roue, avec le circuit électronique associé, et la partie fixe de la structure est assurée, pour chaque roue, par des moyens de couplage comportant deux capacités présentant chacune deux armatures, l'une fixée sur la roue et l'autre, en regard, sur la structure fixe ou châssis de façon que les armatures se faisant face défilent l'une devant l'autre, cette liaison capacitive étant montée en mode de transmission différentiel, les capacités possédant, de préférence, des valeurs égales et étant très proches spatialement l'une de l'autre. Il est ainsi possible d'obtenir une très grande sûreté du couplage entre roue et structure fixe, malgré l'environnement physique et électromagnétique extraordinairement sévère existant à ce niveau, les signaux provenant des capteurs et modulés, par exemple, selon une modulation F.S.K., se trouvant récupérés en dépit de leur puissance minime et de leur faible amplitude, pratiquement dégagés des parasites et bruits de fond.

Une telle disposition présente, en outre, l'avantage de pouvoir utiliser, pour le fonctionnement de l'électronique associée au capteur de roues et la transmission des mesures par les moyens de couplage, une source électrique peu volumineuse, telle que par exemple une pile longue durée implantée directement dans la roue, par exemple, dans un boîtier ou un ensemble commun situé à l'intérieur du pneumatique de roue.

Malgré ses grandes qualités, ce dispositif présente cependant quelques inconvénients. Il demande notamment, pour acheminer les signaux de fréquence élevée et de faible amplitude, issus des pistes capacitives des moyens de couplage capacitif, l'utilisation de câblages de haute performance pour raccorder les roues à l'unité centrale. Celle-ci doit, de son côté, présenter des interfaces dédiées pour pouvoir utiliser les signaux de mesure qui lui sont transmis et dont l'exploitation, notamment en raison des codages performants utilisés, de type F.S.K. ou autre, demande des moyens d'exploitation puissants. Or, en raison des différents intervenants industriels impliqués dans la conception de l'unité centrale, laquelle doit recevoir des informations en provenance d'équipements divers du véhicule, telles que température, vitesse, etc., il importe que l'unité centrale soit aussi simple et standardisée que possible.

La présente invention se propose de remédier à ces inconvénients et de fournir un dispositif de surveillance de pneumatiques de roues de véhicules automobiles d'un fonctionnement sûr et protégé des nombreuses perturbations propres à intervenir dans un véhicule.

Un autre objectif de l'invention est de réaliser un tel dispositif permettant d'utiliser un câblage et une connectique usuels ne nécessitant pas l'emploi de câbles et de connecteurs spéciaux.

Un autre objectif de l'invention est de réaliser un tel dispositif permettant de concevoir et d'utiliser une unité centrale d'exploitation des informations relatives aux pneumatiques qui soit simple, parfaitement standardisable et ne nécessitant pas de processeur puissant et de ce fait pouvant être commune à une unité centrale existante, par exemple antiblocage de roues, contrôle de traction, contrôle de suspension.

Un autre objectif encore de l'invention est de permettre d'utiliser, comme capteurs de température et de pression dans le pneumatique, des capteurs bon marché possédant des dérives importantes tout en ne prévoyant, pour l'électronique de roue associée au capteur, que des sources d'alimentation très faibles et très peu encombrantes, et ceci sans nécessiter de gestion de la compensation des dérives par l'unité centrale.

Un autre objectif encore de l'invention est de fournir un tel dispositif dans lequel les dérives des capteurs puissent être compensées, pour chacune des roues, sans nécessiter de gestion particulière des caractéristiques des différents capteurs individuels lors du montage ou des changements de roues.

L'invention a pour objet un dispositif de surveillance de pneumatiques de roues de véhicules automobiles comportant, sur les roues du véhicule, et de préférence à l'intérieur du pneumatique de roue, au moins un capteur de pression et/ou de température avec un circuit électronique associé alimenté par une source d'énergie électrique de faible puissance portée par la roue, des moyens de couplage pour la transmission, en mode de transmission différentiel, des signaux de mesure générés dans le capteur depuis la roue vers la structure fixe; comportant deux capacités, de préférence égales, présentant chacune une armature fixée sur la roue et une autre armature fixée en regard sur la structure fixe pour que l'armature de roue défile devant elle, des moyens d'exploitation portés par la structure fixe et reliés auxdits moyens de couplage par un câblage de façon à recevoir et traiter les signaux en provenance des moyens de couplage, caractérisé en ce qu'il comporte chaque fois, au voisinage immédiat de la roue, un module électronique de compensation de dérive de capteur, intercalé entre lesdites armatures fixes et le câblage s'étendant entre la roue et l'unité centrale.

Ce module associé à la roue assure ainsi la gestion de l'interface avec les deux armatures capacitives par lesquelles, il reçoit, en mode de transmission différentiel, les informations générées par le ou les capteurs, la compensation de la dérive des capteurs en fonction d'informations stockées dans l'électronique de roues, éventuellement une mise en forme ou un traitement numérique des signaux relatifs aux paramètres mesurés, et la gestion de l'interface avec l'unité centrale par l'intermédiaire du câblage, qui peut être simplement une interface série.

Ce module prévu conformément à l'invention au voisinage immédiat de la roue, peut être par exemple logé dans une piste formant un support longiligne des deux armatures fixes de la capacité mais, en raison des variations très importantes des températures qui peuvent s'y produire, on préfère disposer ce module à faible distance sur ou dans la carrosserie elle-même du véhicule en assurant au besoin une liaison avec la piste capacitive au moyen d'un très court tronçon de câble blindé.

Le module selon l'invention peut être réalisé sous forme d'un boîtier muni de moyens ou pattes de fixation et de deux connecteurs, l'un vers la piste capacitive, l'autre vers le câblage s'étendant entre l'unité centrale et la roue, ce boîtier recevant une carte de circuit imprimé vernie fixée ou clipsée sur son fond, un couvercle étanche refermant le boîtier en maintenant mécaniquement la carte.

Grâce à l'invention, l'électronique de roue se trouve simplifiée et ses dimensions encore réduites. Aucun processeur ou autre moyen de traitement consommateur sensible d'énergie n'est présent.

L'électronique de roue peut ainsi avantageusement comporter un moyen de traitement analogique de signal, du type usuel, relié au(x) capteur(s), une petite mémoire non volatile contenant, sous forme logiciel, les informations relatives aux caractéristiques de dérives du ou des capteurs individuels présents, un moyen de traitement numérique pour la mise en forme et le codage, sensible, d'une part aux signaux provenant du moyen de traitement analogique, et d'autre part aux informations en provenance de la mémoire et relié, en mode de transmission différentiel, aux deux armatures capacitives mobiles de la roue, l'ensemble comportant encore une pile ou autre source d'énergie électrique de faibles dimensions ainsi que le capteur de pression et/ou le capteur de température.

D'autres avantages et caractéristiques de l'invention apparaîtront à la lecture de la description suivante, faite à titre d'exemple non limitatif et se référant au dessin annexé dans lequel :

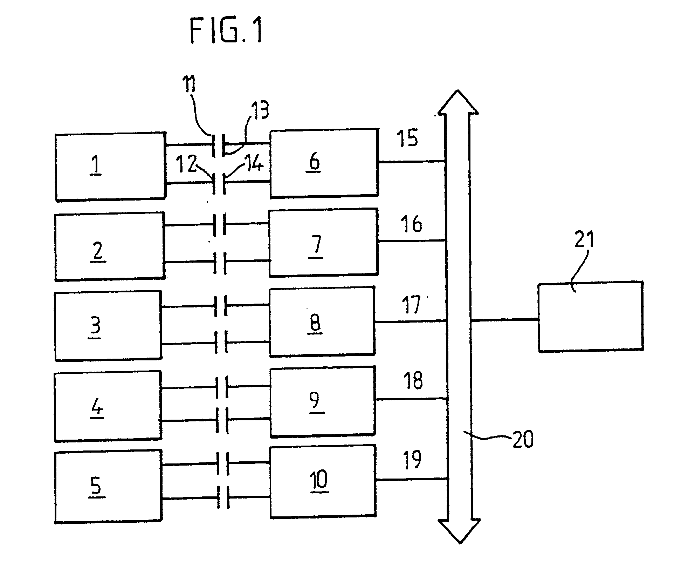

la figure 1 représente une vue schématique de l'ensemble du dispositif selon l'invention,

la figure 2 représente une vue schématique de l'électronique de roue;

la figure 3 représente une vue schématique du module associé à la roue,

la figure 4 représente une vue en coupe transversale d'un boîtier de roue,

la figure 5 représente une vue de dessus de ce boîtier,

la figure 6 représente une vue en perspective éclatée du boîtier du module associé à la roue.

Le dispositif selon l'invention, décrit par exemple pour un véhicule automobile du type conduite intérieure à quatre roues et une roue de secours, comporte, fixé sur la jante des différentes roues, chaque fois un module de roue 1, 2, 3, 4. Un module identique 5 est également monté sur la roue de secours. Ces modules sont chaque fois reliés à un module associé de roue 6, 7, 8, 9, y compris un module associé à la roue de secours, 10, chaque fois par le moyen d'un couplage capacitif conforme au brevet FR-A-82 11 740 comprenant deux capacités identiques dont l'une des armatures, 11, 12 est portée par la jante de la roue, et l'autre armature 13, 14 est portée par une partie fixe de véhicule, par exemple, un étrier de frein, en face de son armature mobile, une disposition similaire étant prévue au niveau de la roue de secours. La liaison entre un module de roue et son module associé est assurée par ce moyen de couplage, selon le mode de transmission différentiel qui, comme on le sait, transmet par chacune des deux voies, c'est-à-dire par chacune des deux capacités, des signaux identiques mais de signes inverses, l'inversion de signe de l'une des voies étant assurée dans le module de roue tel que 1, et une différence algébrique des signaux en provenance des deux voies étant effectuée dans le module associé tel que 6, ce qui élimine pratiquement tout parasite et bruit de fond et permet de recueillir dans le module associé tel que 6, des signaux de haute fréquence, faibles mais parfaitement clairs comprenant, de façon univoque, des valeurs mesurées des paramètres tels que températures, pressions en provenance des capteurs, et les informations figées en provenance de la mémoire non volatile de l'électronique de roue. Après le traitement propre aux modules 6-10, les signaux sont adressés par les différents câbles 15, 16,17, 18, 19, par exemple des câbles à quatre conducteurs, à un bus 20, par exemple du type RS 485 aboutissant, de façon classique à une unité centrale 21 articulée, de façon standardisée, autour d'un processeur ou microprocesseur tout à fait usuel. L'unité centrale 21 peut recevoir différentes autres informations de différents points du véhicule, telles que vitesse du véhicule, température extérieure, informations ou instructions en provenance du tableau de bord du véhicule, etc.

Grâce à l'invention, l'unité centrale 21 peut gérer de façon classique et standardisée l'ensemble des informations en provenance des capteurs des différentes roues.

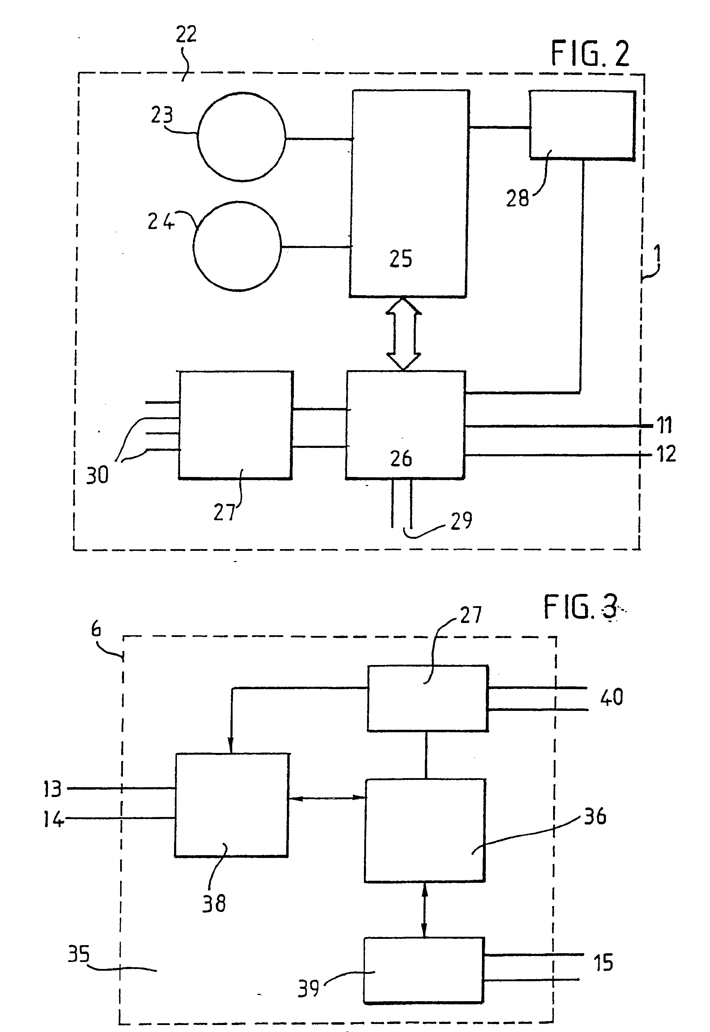

En se référant à la figure 2, on voit que le module de roue comporte, sur une carte de circuit imprimé convenable 22 :

- un capteur de pression 23, de type jauge, implanté sur silicium ;
- un capteur de température 24 de type usuel, classique dans les systèmes électroniques ;
- la partie de traitement analogique 25 destinée d'une part à interfacer les signaux électriques en provenance des capteurs de pression et de température, d'autre part à convertir ces signaux interfacés en grandeurs numériques ;
- la partie de traitement numérique 26 destinée d'une part à assurer le séquencement général des fonctions du module de roue, d'autre part à gérer l'émission-réception de la liaison capacitive ;
- une mémoire non volatile 27 et
- une pile électrique 28 alimentant les deux moyens de traitement 25, 26.

Le moyen de traitement numérique 26, qui présente deux plages formant un point de test 29, est relié au moyen de traitement analogique 25 et à la mémoire 27, dans laquelle on a inscrit les caractéristiques des capteurs 23, 24 déterminées lors d'un test. Le moyen de traitement numérique 26 envoie à l'extérieur les deux conducteurs aboutissant aux armatures 11, 12.

D'un point de vue technologique, les fonctions de traitement analogique 25 et numérique 26 peuvent être regroupées au sein d'un seul circuit spécifique ASIC.

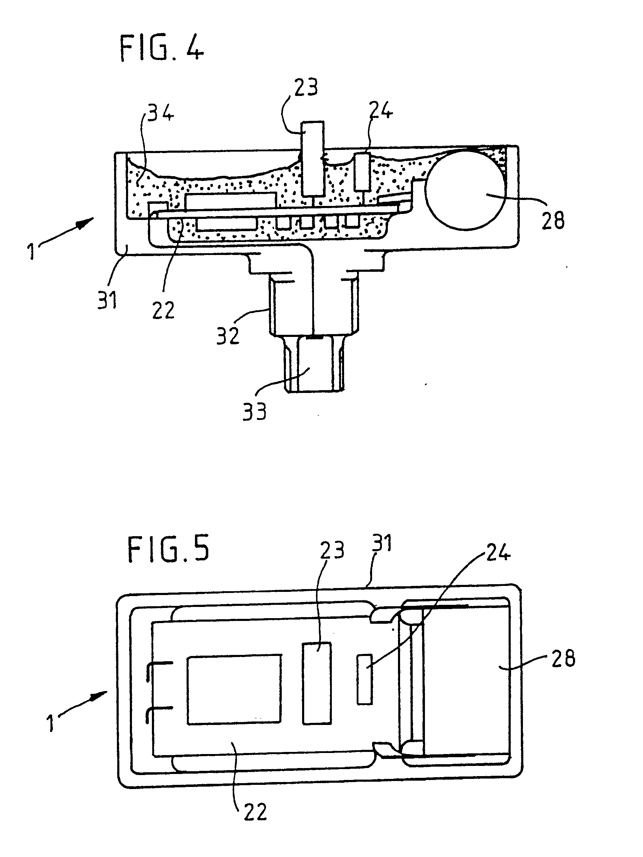

En se référant plus particulièrement aux figures 4 et 5, on voit qu'un module de roue tel que 1, 2, etc., peut être constitué d'un boîtier 31 dont l'une des faces est ouverte et l'autre se prolonge par un embout 32 destiné à traverser un trou pratiqué dans la jante de la roue pour présenter un moyen de connexion 33 électriquement relié aux deux armatures mobiles 11, 12 du moyen de couplage capacitif. Dans le boîtier 31 est logée la pile 28 et la carte 22 avec ses différents éléments, y compris les capteurs de pression 23 et de température 24, dont les faces sensibles émergent hors d'un enrobage isolant et protecteur 34.

Les signaux codés F.S.K. transmis par le moyen de couplage capacitif s'étagent dans une fréquence de préférence comprise entre 50 et 1000 kHz et préférentiellement entre 100 et 400 kHz.

En se référant à la figure 3, on voit qu'un module associé à la roue, tel que 6, possède, sur une carte de circuit imprimé 35 :

- un moyen de traitement numérique 36 tel qu'un microprocesseur à très faible coût (4 ou 8 bits)

- un circuit d'alimentation stabilisé usuel 37,
- un circuit d'interface 38 avec le couplage capacitif et
- un circuit d'interface série 39 avec le câblage reliant la roue au bus et à l'unité centrale 21.

L'interface 38 reçoit les signaux en provenance des armatures fixes de capacités 13, 14, en effectue la somme algébrique et adresse l'information codée au moyen de traitement numérique 36. Celui-ci, recevant ainsi, d'une part, les informations relatives aux signaux générés dans les capteurs et, d'autre part, les informations relatives aux caractéristiques des capteurs en provenance de la mémoire 27, procède à la compensation de la dérive des capteurs (la dérive des capteurs est fonction de la pression et/ou de la température ; ces caractéristiques sont propres à chaque capteur individuel et déterminées lors d'un test et inscrites dans la mémoire 27).

L'alimentation 37 est alimentée en énergie électrique par des conducteurs 40, qui peuvent suivre le même chemin que les câblages 15 à 19. Les câblages 15 à 19 sont connectés à l'interface série 39 par des connecteurs usuels bon marché.

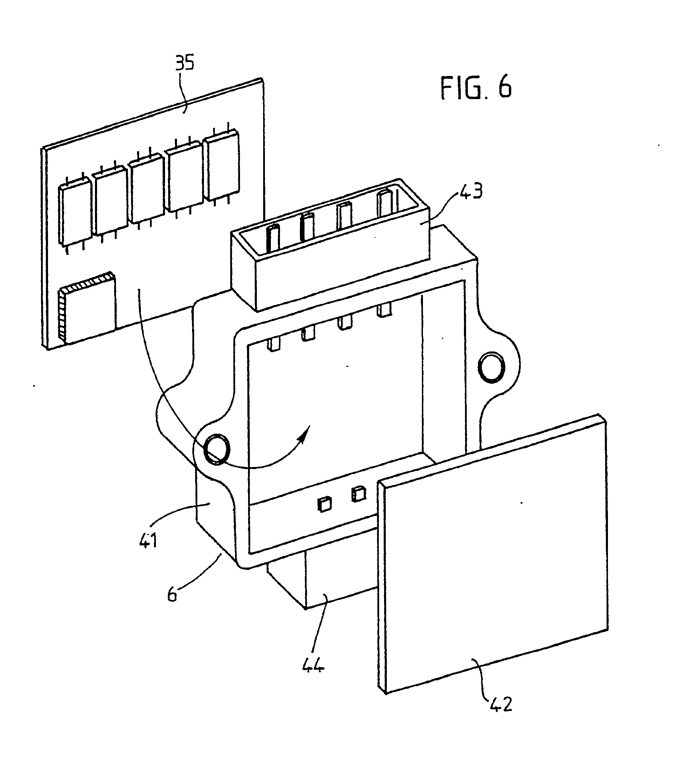

En se référant à la figure 6, on voit un tel module tel que 6 destiné à être fixé sur une partie de carrosserie au voisinage immédiat des armatures fixes 13, 14, c'est-à-dire au voisinage immédiat de l'étrier de frein mais séparé de celui-ci de façon à ne pas subir les variations de température extrêmes de l'étrier. Il comporte un boîtier 41 avec deux pattes permettant sa fixation sur la carrosserie, ce boîtier formant un logement susceptible de recevoir la carte 35 avant fermeture hermétique d'un couvercle 42. Le boîtier présente un connecteur 43 pour l'alimentation 40 et le câblage 15 et, à l'opposé, un connecteur 44 permettant la liaison par un court cordon blindé, avec les armatures fixes 13, 14 des deux capacités du moyen de couplage capacitif.

Le module tel que 6 adresse ainsi à l'unité centrale les informations compensées relatives aux mesures des paramètres pression et température dans le pneumatique de la roue qui lui est associée, sous une forme et avec une fréquence directement utilisables par l'unité centrale.

## Revendications

1. Dispositif de surveillance de pneumatiques de roues de véhicules comportant, sur les roues du véhicule, au moins un capteur de pression (23) et/ou de température (24) avec un circuit électronique associé (22) alimenté par une source d'énergie électrique de faible puissance (28), des moyens de couplage pour la transmission, en mode de transmission différentiel, des signaux de mesure générés dans le capteur depuis la roue vers la structure fixe, comportant deux capacités présentant chacune une armature (11, 12) fixée sur la roue et une autre armature (13, 14) fixée en regard sur la structure fixe pour que l'armature de roue défile devant elle, des moyens d'exploitation (21) portés par la structure fixe et reliés auxdits moyens de couplage par un câblage (15-19, 20) de façon à recevoir et traiter les signaux en provenance des moyens de couplage, caractérisé en ce qu'il comporte, chaque fois, au voisinage immédiat de la roue, un module électrique de compensation de dérive de capteurs (6-10) intercalé entre lesdites armatures fixes (13, 14) et le câblage s'étendant entre la roue et l'unité centrale.

2. Dispositif selon la revendication 1, caractérisé en ce que ledit module (6-10) est agencé pour assurer la gestion de l'interface avec les deux armatures capacitives des moyens de couplage, la compensation de la dérive des capteurs en fonction des informations stockées dans l'électronique de roue, et la gestion de l'interface avec une unité centrale des moyens d'exploitation (21) par l'intermédiaire du câblage.

3. Dispositif selon la revendication 2, caractérisé en ce que ledit module comporte un circuit de gestion d'interface avec la liaison capacitive (38), une unité de traitement numérique (36), un circuit d'interface série (39) pour la liaison avec le câblage se dirigeant vers l'unité centrale, et une alimentation stabilisée (37) alimentée depuis le véhicule.

4. Dispositif selon l'une des revendications 2 et 3, caractérisé en ce que ledit module est réalisé sous forme d'un boîtier (41) muni de moyens ou pattes de fixation et de deux connecteurs (43, 44), se dirigeant respectivement vers le câblage et vers les armatures des moyens de couplage, ledit boîtier recevant une carte de circuit imprimé (35) fixée ou clipsée sur son fond, un couvercle étanche (42) refermant le boîtier en maintenant mécaniquement la carte.

5. Dispositif selon l'une quelconque des revendications 2 à 4, caractérisé en ce que ledit module est fixé au voisinage immédiat de la roue sur la carrosserie en étant relié aux moyens de couplage capacitif par un court tronçon de câble blindé.

6. Dispositif selon l'une quelconque des revendications 1 à 5, caractérisé en ce que l'électronique de roue associée se présente sous forme d'un module comprenant une mémoire non volatile (27) dans laquelle sont stockées les informations relatives aux caractéristiques de dérive des capteurs.

7. Dispositif selon la revendication 6, caractérisé en ce que l'électronique de roue associée comporte, relié aux capteurs (23, 24), un moyen de traitement des signaux de capteurs, un moyen de traitement ou codage numérique pour la mise en forme et le codage (26) relié d'une part au moyen de traitement analogique (25) et d'autre part à la mémoire non volatile (27), et une source d'alimentation électrique locale (28).

8. Dispositif selon la revendication 7, caractérisé en ce qu'il comporte un module de roue présentant un boîtier (31) avec des moyens de connexion (33) vers les armatures capacitives de roue, ledit boîtier présentant une face ouverte vers l'intérieur du pneumatique, une carte de circuit imprimé (22) avec le circuit électronique associé au capteur, un capteur de pression (23), un capteur de température (24), une pile (28), l'ensemble de ces éléments étant enrobé dans un revêtement (34) de façon que les faces sensibles des capteurs émergent du revêtement.

# FIG.1

FIG. 2

FIG. 3

FIG. 4

FIG. 5

FIG. 6

EP 0 445 003 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 446 248  (BOSCH)<br>* Abrégé; revendications 1,2,8; figures 1,2 *<br>--- | 1-3,6,7 | B 60 C   23/04<br>B 60 C   23/20 |
| A | DE-A-3 242 291  (MOTO METER)<br>* Page 12, alinéa 2; revendications 2,3; figures *<br>--- | 1,4,5,8 | |
| A | GB-A-2 122 757  (PRECISIO MECANIQUE LABINAL)<br>* * En entier * & FR-A-2 529 513 (Cat. D) *<br>--- | 1,3 | |
| A | EP-A-0 341 226  (SCHRADER)<br>* Abrégé; revendications 1,6; figures 1,2 *<br>--- | 1,5 | |
| A | GB-A-2 171 525  (PRECISION MECANIQUE LABINAL)<br>* Abrégé; revendications 1,5; figure 1 *<br>--- | 1 | DOMAINES TECHNIQUES RECHERCHES (Int. Cl.5) |
| A | EP-A-0 345 199  (TSAGAS)<br>* Abrégé; revendication; figures 1a,1b,14 *<br>----- | 1 | B 60 C |

Le présent rapport a été établi pour toutes les revendications

| Lieu de la recherche | Date d'achèvement de la recherche | Examinateur |
|---|---|---|
| LA HAYE | 03-06-1991 | PIRIOU J.C. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..............................................................................
& : membre de la même famille, document correspondant

EPO FORM 1503 03.82 (P0402)